# EUROPEAN PATENT APPLICATION

(11) **EP 2 749 613 A1**
(43) Date of publication of application: **02.07.2014**
(21) Application number: 13005834.0
(22) Date of filing: 16.12.2013
(51) Int. Cl.: C09D 175/14, C09D 175/16, C08K 5/07, C08K 5/5397

(54) **Glossy one-component aqueous enamel and use thereof for protection of melamine coated surfaces**

(30) Priority: 28.12.2012 SI 201200389
(71) Applicant: RC31, Razvojni center kreativne Pohistvene industrije d.o.o., 4228 Zelezniki (SI)
(72) Inventor: Premrl, Branka, 1351 Brezovica pri Ljubljani (SI); Slibar, Mateja, 4290 Trzic (SI); Cevka, Darko, 1241 Kamnik (SI); Knehtl, Branko, 1241 Kamnik (SI); Znoj, Bogdan, 1261 Ljubljana-Dobrunje (SI)
(74) Representative: Borstar, Dusan

(57) **Abstract**

A glossy one-component aqueous enamel is proposed according to the invention, which is curable by means of UV-light and suitable for protection of surfaces, in particular surfaces coated with melamine layer, among others of fibrous plates i.e. so-called MDF-plates. Said enamel comprises a mixture of two UV-curable polyurethane aqueous dispersions, namely a highly reactive PU dispersion suitable for increasing a curing rate, and a PU dispersion suitable for enhancing reflectiveness, at least one photoinitiator, which is suitable for curing of the coating, when it is exposed to UV-light, furthermore at least one pigment, which suitable for establishing each desired colour shade, and optionally at least one rheology-improving agent, still further water as a solvent for the purposes of adjusting viscosity of the coating during application thereof, and moreover optionally also at least one further additive, which is suitable for establishing of each desired characteristics depending on each method of application of the coating.

## Description

The present invention refers to one-component aqueous enamel, which is hardened by means of UV-light and is suitable for protection surfaces coated with melamine, in particular of fibrous plates, which are known to those skilled in the field of wood processing and manufacturing of furniture as MDF-plates, and which are coated with a melamine layer. The enamel according to the invention enables achieving of mirror-like glossy surface by means of application of just a single coating without previous treatment and without subsequent application of another or further layers.

Such inventions belong to chemistry, namely to structure of macro-molecular compounds.

The purpose of the invention is to create a coating for producing of an enamel suitable for providing a chemical resistant and mirror-like glossy surface.

A further purpose of the invention is to create a coating for producing enamel suitable for application on melamine coated surfaces, in particular on MDF-plates, which should allow industrial application of such coating by means of splashing and/or spraying, followed by drying and hardening. Said drying and hardening of an UV-hardened aqueous enamel are very important due to formation of the layer as such, and also due to establishing each desired resistance thereof.

A further task of the invention is to provide an ecologically acceptable and technologically simple consistency of such coating for producing said enamel, which could enable reduction of environment pollution and higher economic efficiency during the process of drying and hardening of the coating.

Improved coatings for protection and providing each desired aesthetic appearance of various substrates either in the furniture manufacturing or also in other industrial fields are desired due to reduction of environment pollution and simultaneously also due to reduction of costs of application and hardening, namely costs of treatment per square unit, e.g. costs of treatment per square meter.

The existing commercially used coating systems enable achievement of mirror-like glossy appearance, which is determined by 88 - 93% reflectiveness at the angle 60° on various substrates used for different purposes. Polyurethane (PU) aqueous dispersions in combination with cellulose fibers are proposed in US 7,754,811 B2 (*Bayer MaterialScience AG*)*,* which should shorten the time of drying, but glossy surface as a required final effect is actually not mentioned therein at all.

Obtaining a glossy surface by means of aqueous PU-systems is disclosed in US 2004/0167525 (*BAYER POLYMERS LLC*) and US 2010/0321499 A1 (*BASF COATINGS AG*)*,* where a reflectiveness higher than 90% should be achieved, but this is however feasible by means of at least two coatings and by means of classic technology of hardening, namely by high-temperature air drying. An aqueous UV-hardened PU-dispersion is also mentioned therein, which is suitable for producing coatings for floor protection, by which also reflectiveness higher than 90% should be achieved, however again by means of at least two coating layers.

Quite similar applies to coatings for protection of melamine coated wooden plates, namely fibrous plates, which are known to those skilled in the art as so-called MDF-plates and which are covered by melamine layer. When using a two-component PU-base coating, at least two layers need to be applied for the purposes of obtaining appropriate a final shiny surface. The first layer is merely serving for covering minor defect on the surface as well as for establishing adhesiveness towards the base surface, and moreover to establish a good adhesiveness towards the subsequent coating with the final classic two-component PU glossy enamel. The second layer is therefore a two-component PU glossy enamel, which enables achieving of high reflectiveness and also serves for assuring of appropriate physical and chemical protection. Emission of organic solvents in the aforementioned coating system is between 40 and 50% per weight of each applied coating. The time of drying such coating, namely the first and the second layer, is 4 to 6 hours at increased temperature (50°C at maximum) and the thickness of coating of 120 - 130 µm. Since PU enamels are two-component coatings, formation of a film and hardening are performed by chemical reaction of NCO groups of a component B with a component A, and such coating belongs to reaction hardening materials. The main deficiencies of two-component polyurethane enamels are time-limited applicability of the mixture (the so-called "pot life") of the component A and the component B, sensibility of the component B to the moisture in the air, as well as relatively slow i.e. long-term hardening of such glossy systems. Said time-limited applicability of the mixture of components (A+B) means that after certain time the viscosity of the mixture is increased up to such level, that the application thereof becomes impossible. Also physical and chemical properties of the coating get worse, and the coating cannot be applied anymore. Such inappropriate mixture is transformed to a waste, which not only reduces efficiency of consumption of the coating and increases expenses of treatment per unit (e.g. per each square meter), but also involves environment pollution.

An one-component aqueous UV-hardened enamel is proposed according to the invention, including a technologic method of preparing thereof, which upon application thereof onto a surface coated with melamine foil, in particular to a coated MDF-plate, ensures a mirror-like glossy appearance.

The proposed invention relies on introduction of two UV-curable polyurethane (PU) aqueous dispersions as basic components i.e. binding means, to which during the process of preparing the coating also additional components are added, in particular a photoinitiator, defoaming agents, flow-aids, touch improving agents, rheology settling agents, deionised water and pigment paste, by which a color shade of such obtained coating is determined. Due to said introduction of UV-curable aqueous dispersions, such system is hardened only when it is exposed to UV-light. Durability of such one-component UV-curable aqueous enamel is 6 months. Indoor storage of such coatings without direct exposure to sun light is foreseen at temperature between +5 and +35°C.

Hardening of such one-component UV-curable aqueous enamel is a two-stage physical and chemical process. During the first stage, water is evaporated at increased temperature within drying chambers, which is then in the second stage followed by chemical hardening of the coating by means of UV-rays. Said removal of water by means of evaporation in said drying chambers is a physical drying process, which usually takes approximately 1 - 1,5 h. The coating is then hardened i.e. cross-linked by passing through an UV-chamber, which is furnished with UV-bulbs suitable for radiation of UV-light. Said UV-lights are adapted to radiate the light within a determined spectral range of wavelengths between 200 and 400 nm, and mercury (Hg) and/or gallium (Ga) bulbs are used for this purpose. UV-light activates a photoactive component, namely a photoinitiator, which is a component of said coating. Each photoinitiator is degraded to radicals, which initiate a desired chemical reaction, namely a radical polymerization. Consequently, a cross-linked polymeric structure is obtained, which results in good physical and chemical properties of such obtained materials.

Configuration of each sequence of bulbs is very important for the purposes of hardening such one-component UV-curable aqueous enamel. The Ga-bulb is arranged in the initial position and is due its longer wavelength suitable for hardening of the internal area of pigment containing coatings, while the Hg-bulbs emitting shorter wavelengths on the second and third position are suitable for hardening of the coating surface.

In comparison with the state of the art protecting systems by means of melamine coated MDF fibrous plates, the coating according to the invention is different quite in view of chemical structure of used raw materials, which enables achieving a highly glossy surface of the coating by means of application of a single layer and without application of a base layer. The invention moreover enhances the productivity i.e. the curing speed of each applied coating and excels in minimal waste coating on industrial lines, since the durability of one-component aqueous UV-curable coating is at least six months and is therefore longer than by two-component PU-coatings.

According to the invention, a coating for protection of wooden surfaces is foreseen, namely a coating on the basis of UV-curable aqueous polyurethane dispersions, namely a highly reactive PU aqueous dispersion, which is intended for acceleration of hardening, as well as a PU aqueous dispersion for achieving of glossy appearance. Each component is available in amount between 20% and 70% per weight, and the ratio is between 1:2,5 to 1:6. Content of pigments is between 3% and 15% per weight, content of photoinitiators is between 0,5% and 10% per weight, content of additives is 0,5% to 10% per weight and content of water as solvent is between 20% and 75% per weight.

A simple and economic method is provided for preparing the coating, in which a mixing vessel with various stirring tools is used, which enables manufacturing of homogenous mixture of various components of the coating.

A preferred method according to the invention provides that preparing of an one-component aqueous UV-curable enamel for the purposes of application on a MDF-plate is performed by preparing UV-curable polyurethane water dispersions by mixing in the mixing vessel at 500 - 600 rpm, preferably 550 rpm, in duration of 1 min to 10 min, preferably 5 min. During the next step, and antifoaming agent, flow-aid and touch improving means are added during mixing at 800 - 900 rpm, preferably 850 rpm. After said agents have been added, mixing is continued 10 to 20 min, preferably 15 min.

During the next step, a photoinitiator is added into the vessel during mixing at 800 to 900 rpm, preferably 850 rpm, wherein said mixing is performed between 1 min and 20 min, preferably 10 min. Upon that, pigment pasta is added into the vessel during the mixing, which is performed at 600 - 700 rpm, preferably 650 rpm for 5 to 60 min, preferably approx. 20 min. During the last step, water is added as a solvent, by which a desired viscosity is achieved, wherein the final mixture is exposed to mixing at 500-600 rpm, preferably 500 rpm for 1 min to 30 min, preferably approx. 20 min.

In accordance with the invention, said one-component UV-curable aqueous enamel of the previously described consistence and prepared by means of the previously described method, also the use of said enamel on industrial lines is foreseen, by which application is performed either by spraying or splashing.

The previously mentioned technical problem is therefore solved by means of an one-component UV-curable aqueous enamel, which is available as a combination of two UV-curable aqueous polyurethane dispersions, namely an aqueous dispersion used for achieving a glossy appearance as well as of an highly-reactive PU aqueous dispersion. The main benefit of the invention is that by means of just one layer of such enamel on a melamine-coated surface, in particular a fibrous MDF plate, high reflectiveness 85% to 95% at the angle 60° is achieved, with minimal content of evaporating organic component and high hardening speed any practical 100% yield without limitations in view of durability, which is in comparison with two-component polyurethane enamel consisting of components A and B and limited pot life really a great benefit.

A preferred embodiment of the method according to the invention provides that by preparing said enamel, a combination of UV-curable polyurethane aqueous dispersion, which enables achieving a glossy surface and is at present commercially available at Cytec Industries under the name Ucecoat 7710, and polyurethane aqueous dispersion, which is at present commercially available at Cytec Industries under the name Ucecoat 7699, is used.

In addition to said combination of UV-curable polyurethane aqueous dispersions, a photoinitiator is used in manufacturing of said one-component UV-curable aqueous enamel, which serves for hardening of the coated, when exposed to UV-light, and also some additives, which enable achieving of properties, which are required for the purposes of each desired application. In order to achieve each desired colour shade, a previously prepared aqueous pigment paste is used. Finally, deionised water is added as a solvent for adjusting of each desired viscosity.

By means of said combination of UV-curable polyurethane aqueous dispersion, photoinitiator, additives and deionised water as a solvent, the one-component UV-curable aqueous enamel is produced, which is capable to assure a glossy surface by means of just a single layer and without a previously applied base layer.

Thanks to said UV-polyurethane aqueous dispersions in ratio between 20% and 70% per weight, additives like photo initiator and deionised water as a solvent, in comparison with the state of the art coatings on melamine-coated MDG fibrous plates essentially better reflectiveness is achieved, which is from usual values between 30% and 60% at the angle 60° increased to the value between 85% and 95% i.e. which to a mirror efficiency.

Manufacturing of said one-component UV-curable aqueous on the basis of UV-curable polyurethane aqueous dispersions is in practice performed in a relatively simple and economic manner by means of a process, in which a highly reactive PU aqueous dispersion, which is used to achieve high hardening rate, and a PU aqueous dispersion, which is used for the purposes of achieving high reflectiveness, in ratio between 1 : 2,5 and 1 : 6 are fed into a mixing vessel furnished with n dissolving mixer rotating between 500 and 800 rpm, wherein the coating is prepared within 90 min at maximum at temperature up to 40°C. Between 20% and 70% per weight of UV-curable polyurethane aqueous dispersions are contained in the coating. The dry substances incorporated within the final coating i.e. enamel represent between 35,0% and 60,0% per weight.

In practical manufacturing of an one-component UV-curable aqueous enamel on the basis of UV-curable polyurethane aqueous dispersions, an UV-curable highly reactive polyurethane aqueous dispersion *Ucecot 7699* manufactured by *Cytec Industry* and UV-curable polyurethane aqueous dispersion *Ucecot 7699* manufactured by *Cytec Industry,* which is intended to assure reflectiveness, were used. Their ratio per weigh was between 1 : 2,5 and 1: 6. Said combination of UV-curable aqueous dispersion was charged into a mixing vessel made of a corrosion-resistant material, in which mixing by means of dissolver mixer was performed, wherein the relationship between the diameter of said mixer and the diameter of said vessel was 1: 3. Mixing was performed at the speed of the mixer 500 - 600 rpm at temperature 20 - 35°C, the duration was 1 min to 10 min. Upon that, an anti-foaming agent *Additol VXW 4926* manufactured by *Cytec Industry* was added to said mixture of UV-curable polyurethane aqueous dispersions, and mixing was performed at 800 - 900 rpm at temperature 20 - 35°C and duration 1 min up to 10 min. Upon that, a touch-improving agent *Efka 3299* manufactured by *BASF* was added, and mixing was performed at 800 - 900 rpm at temperature 20 - 35°C and in duration between 1 and 10 min. A flow-aid *Tego Twin 4100* manufactured by *Evonik Industries* was added during the subsequent step, and mixing was performed at 800 - 900 rpm at temperature 20 - 35°C and in duration between 1 and 10 min. Upon introduction of the previously mentioned components, photo initiators for assuring UV-curable in the core and on the surface were added, namely *Esacure TZT* manufactured by *Lamberti S.P.A.* and *Irgacure 819 DW* manufactured by *BASF,* which was followed by mixing at 800 - 900 rpm at temperature 20 - 35°C and in duration between 1 and 20 min. Pigments in the form of a paste form ware then added, which are commercially available as *Unihel AQ pasto 01* manufactured by *Helios Tovarna barv, lakov in umetnih smol Koli* 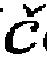 *evo, d.o.o.,* which was then followed by mixing at 600 - 700 rpm at temperature 20 - 35°C and in duration between 20 min and 40 min. During the last stage, a rheology-settling additive was added, which is commercially available as *Collacrel PU 80* and manufactured by *BASF,* which was then followed by mixing at 500 - 600 rpm at temperature 20 - 35°C and in duration 10 to 30 min. When necessary, the viscosity was adjusted by adding deionised water, and mixing was performed at 500 - 600 rpm at temperature 20 - 35°C and in duration of 1 min to 10 min.

Upon the manufacturing, the obtained coating was tested after 24 hours. The following parameters were observed:
- discharging time (DIN 4/20°C);
- density at 20°C by using a pycnometer (ISO 2813-1:1997);
- dry ingredients (1h/125°C) (ISO 3251:2003);
- reflectiveness at the angle 60° (reflectometer) (ISO 2813:1999); and
- adhesiveness (cross-like cut) (ISO 2409:2007).

Drying/hardening rate of the one-component aqueous enamel was verified on the laboratory testing line in the company *Helios Tovarna barv, lakov in umetnih smol Koli* 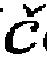 *evo, d. o. o..*

### Example 1

673 g of the UV-curable polyurethane aqueous dispersion for enhancing reflectiveness, in particular for establishing a mirror-like surface effect, namely a product of the manufacturer *Cytec Laboratories* known under the commercial name *Ucecoat 7710* was charged into a mixing vessel made of a corrosion-resistant material, namely stainless steel, with diameter 15,0 cm and furnished with a dissolver mixer with diameter 5,0 cm. After that, 180 g of UV-curable highly reactive polyurethane aqueous dispersion *Ucecoat 7699* obtained from *Cytec Laboratories* was charged into the same vessel. The ratio per weight of both aqueous dispersions was 3,74. Mixing of the mixture of both dispersions was performed at 500 rpm in duration of 5 min. Upon that, 15 g of antifoaming agent *Additol VXW 4296* obtained from *Cytec Laboratories* was added during 5 min mixing at 500 - 600 rpm at temperature 20 - 35°C. Upon that, the touch improving agent *Efka 3299* obtained from BASF was added in amount of 10 g and also the flow-aid *Tego Twin 4100* manufactured by *Evonik Industries AG.* Mixing was performed at 850 rpm, and each adding of an ingredient was followed by 5 min mixing. Upon that, a combination of two photo initiators was added, namely 10 g *of Esacure TZT* manufactured by *Lamberti S.P.A.* and 10 g of *Irgacure 819 DW* manufactured by *BASF.* Mixing for 5 minutes at 850 rpm was performed after adding of each component. During the next stage, 100 g of pastous pigments *Unihel pasta 01* manufactured by *Helios Tovarna barv, lakov in umetnih smol Koli* 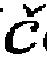 *evo, d.o.o.* was added, which was then followed by 30 min of mixing at 600 rpm. In addition to that, 1 g of rheology-settling agent *Collacral PU 80* manufactured by *BASF* was added, which was followed by 20 min mixing at 500 rpm.

Characteristics of such obtained one-component UV-curable coating were the following:
- viscosity = 57s DIN 4/20°C;
- dry ingredients = 44%;
- pH = 7,0;
- density = 1,090 g/cm³.

Such obtained one-component UV-curable aqueous coating has been applied onto a fibrous MDF plate coated with a melamine layer. Said melamine-coated MDF plate was prior to application of coating grinded by paper (P400 and P600). The one-component UV-curable aqueous coating was applied in a single layer by splashing by means of a splashing apparatus *CEFLA,* which was then followed by drying in a vertical drying chamber for 90 min. Temperature in the first zone was 30°C, in the second zone 50°C and in the third zone 30°C. Such prepared coated MDF-plate was then exposed to UV-light in an UV-chamber. Said UV-chamber was furnished with two UV-bulbs, namely with a gallium (Ga) bulb with power 120 W/cm and a mercury (Hg) bulb with power 120 W/cm.

Characteristics of hardened surface were the following:
- reflectiveness (angle 60%) = 90 - 92%;
- adhesiveness towards the base = 0.

### Example 2

656 g of the UV-curable polyurethane aqueous dispersion for enhancing reflectiveness, namely a product of the manufacturer *Cytec Laboratories* known under the commercial name *Ucecoat 7710* was charged into a mixing vessel made of a corrosion-resistant material, namely stainless steel, with diameter 15,0 cm and furnished with a dissolver mixer with diameter 5,0 cm. After that, 200 g of UV-curable highly reactive polyurethane aqueous dispersion *Ucecoat 7699* obtained from *Cytec Laboratories* was charged into the same vessel. The ratio per weight of both aqueous dispersions was 3,28. Mixing of the mixture of both dispersions was performed at 500 rpm in duration of 5 min. Upon that, 10 g of anti-foaming agent *Additol VXW 4296* obtained from *Cytec Laboratories* was added, and 3 g of touch improving agent *Tego Glide 482* manufactured by *Evonik Industries AG* and 10 g of flow-aid *Tego Twin 4100* manufactured by *Evonik Industries AG.* Mixing in duration of 5 min was performed at 850 rpm after adding of each component. Upon that, a photo initiator, namely a combination of two photo initiators was added, namely 10 g of of *Irgacure* 184 manufactured by *BASF and 100 g of Irgacure 819 DW* manufactured by *BASF.* Mixing for 5 minutes at 850 rpm was performed after adding of each photo initiator. During the next stage, 100 g of pigment paste *Unihel AQ pasto 01* manufactured by *Helios Tovarna barv, lakov in umetnih smol Koli* 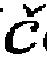 *evo, d.o.o,* was added, which was then followed by 30 min of mixing at 600 rpm. In addition to that, 1 g of rheology-settling agent *Collacral PU 80* manufactured by *BASF* was added, which was followed by 20 min mixing at 500 rpm.

Characteristics of such obtained one-component UV-curable coating were the following:
- viscosity = 53s DIN 4/20°C;
- dry ingredients = 43,8%;
- pH = 7,0;
- density = 1,088 g/cm³.

Such obtained one-component UV-curable aqueous coating has been applied onto a fibrous MDF plate coated with a melamine layer. Said melamine-coated MDF plate was prior to application of coating grinded by paper (P400 and P600). The one-component UV-curable aqueous coating was applied in a single layer by splashing by means of a splashing apparatus *CEFLA,* which was then followed by drying in a vertical drying chamber for 90 min. Temperature in the first zone was 30°C, in the second zone 50°C and in the third zone 30°C. Such prepared coated MDF-plate was then exposed to UV-light in an UV-chamber. Said UV-chamber was furnished with two UV-bulbs, namely with a gallium (Ga) bulb with power 120 W/cm and a mercury (Hg) bulb with power 120 W/cm.

Characteristics of hardened surface were the following:
- reflectiveness (angle 60%) = 90%;
- adhesiveness towards the base = 0.

## Claims

1. Glossy one-component aqueous enamel, which is curable by means of UV-light and suitable for protection of surfaces, in particular surfaces coated with melamine layer, among others of fibrous plates i.e. so-called MDF-plates, said enamel comprising
- a mixture of two UV-curable polyurethane aqueous dispersions, namely a highly reactive PU dispersion suitable for increasing a curing rate, and a PU dispersion suitable for enhancing reflectiveness;
- at least one photoinitiator, which is suitable for curing of the coating, when it is exposed to UV-light;
- at least one pigment suitable for establishing each desired colour shade, and optionally at least one rheology-improving agent;
- water as a solvent for the purposes of adjusting viscosity of the coating during application thereof; and
- optionally at least one further additive, which is suitable for establishing of each desired characteristics depending on each method of application of the coating.

2. Enamel according to Claim 1, wherein the content of each component in mixture of said UV-curable polyurethane aqueous dispersions, namely a highly reactive PU dispersion suitable for increasing a curing rate, and a PU dispersion suitable for enhancing reflectiveness, is between 20% and 70% per weight, and their ratio per weight is 1 : 2,5 to 1 : 6.

3. Enamel according to Claim 1 or 2, wherein at least one pigment is available in the form of aqueous pigment paste, and the content of pigments, or said pigment paste respectively, is between 3% and 15% per total weight of the enamel.

4. Enamel according to anyone of Claims 1 - 3, wherein two photoinitiators are used, which are each per se sensible for UV-light of different wavelengths, and the content of both of them is between 0,5% and 10% per total weight of the enamel.

5. Enamel according to anyone of Claims 1 - 4, wherein at least one additive, which is suitable for establishing of each desired characteristics depending on each method of application of the coating, is a defoaming agent and/or a touch improving agent, wherein the content of each disposable rheology improving agents is between 0,5% and 10% per total weight of the enamel.

6. Enamel according to anyone of Claims 1 - 5, wherein the water as a solvent is a deionised water, and the content thereof is between 20% and 75% per total weight of the enamel.

7. Enamel according to anyone of Claims 1 - 6, wherein the contents of dry substances in the one-component UV-curable enamel is between 42,0% and 46,0% per weight.

8. Process of manufacturing of a coating, which is suitable for establishing a single-layer glossy UV-curable aqueous enamel on each disposable surface, in particular on a melamine-coated MDF-plate, said method comprising
- mixing of two UV-curable polyurethane aqueous dispersions, namely a highly reactive PU dispersion suitable for increasing a curing rate, and a PU dispersion suitable for enhancing reflectiveness;
- further mixing by adding at least one additive, which is suitable for establishing of each desired characteristics depending on each method of application of the coating;
- still further mixing by adding a defoaming agent and/or a flow-aid and/or a touch improving agent;
- still further mixing by adding a photoinitiator;
- still further mixing by adding at least one pigment, in particular in the form of aqueous pigment paste, optionally together with a rheology improving agent; as well as
- mixing by adding water as a solvent, in particular deionised water, for the purposes of adjusting of viscosity of such obtained coating.

9. Method according to Claim 8, wherein in a reaction vessel, which consists of corrosion-resistant material and is furnished with a dissolver mixer, wherein the ratio between a diameter of said mixer and diameter of said vessel is at least approximately 1 : 3, and in which the temperature is maintained below 40°C
- during the first step an UV-curable highly reactive polyurethane aqueous dispersion suitable for increasing a curing rate is mixed at 500 - 600 rpm, preferably 550 rpm, in duration of 1 min to 10 min, preferably 5 min, with an UV-curable polyurethane aqueous dispersion, wherein the content of each of them is between 20% and 70% per weight and their mutual ratio is between 1 : 2,5 and 1: 6;
- upon which during the second step an antifoaming agent and/or a flow-aid and/or a touch improving agent is added into said vessel by mixing at 800 - 900 rpm, preferably 850 rpm, upon which said mixing is continued for 10 min to 20 min, preferably approx. 15 min;
- upon which during the third step at least one photoinitiator, preferably two photoinitiators which are sensible to UV-light of different wavelengths, is/are added by mixing at 800 - 900 rpm, preferably 850 rpm, wherein said mixing is performed for 1 min to 20 min, preferably for approx. 10 min;
- upon which during the fourth step at least one pigment paste, and optionally a rheology improving agent is/are added by mixing at 600 - 700 rpm, preferably 650 rpm, wherein said mixing is performed for 5 min to 60 min, preferably for approx. 20 min;
- upon which during the last step deionised water as a solvent suitable for adjusting each desired viscosity is added by mixing at 500 - 600 rpm, preferably 500 rpm, wherein said mixing is performed for 1 min to 30 min, preferably for approx. 20 min.

10. Method of preparing a glossy UV-curable aqueous enamel in the form of a coating on a melamine-coated surface, wherein
- a single layer of coating according to anyone of Claims 1 - 7 produced by method according to Claims 8 and 9 is applied onto said melamine-coated surface by means of spraying or splashing;
- upon which such single-layer coating is firstly dried due to evaporation of water and then hardened by curing on the basis of exposing it to UV-light.

11. Method according to Claim 10, wherein said drying of such applied coating for the purposes of formation of the enamel according to anyone of Claims 1 - 7 is performed by means of evaporation of water within a drying chamber at increased temperature in duration of at least 1 - 1,5 h, which is then followed by hardening of said coating by means of UV-light in an UV-chamber, which is furnished with UV-bulbs, which are selected for the purposes of emitting ultraviolet light within the spectral area of wavelengths between 200 and 400 nm.

12. Method according to Claim 11, wherein said UV-hardening of the coating is performed by means of successive exposing thereof to UV-light consisting of at least two different wavelengths, which means firstly to the UV-light with longer wavelength in order to assure curing and hardening of the interior of the coating, and then to the light with shorter wavelength in order to assure curing on the external surface of the coating.

13. Method according to Claim 12, wherein said UV-hardening of the coating is during the first stage performed by means of the light with longer wavelength, which is generated by means of gallium (Ga) bulbs, and then in the second stage by means of the light with shorter wavelength, which is generated by mercury (Hg) bulbs.

14. Use of the coating, obtained by method according to Claims 8 and 9, for establishing a single-layer glossy enamel on the surface of melamine layer applied to a suitable base, wherein the reflectiveness at the angle 60° is between 85% and 95% and corresponds to appearance of a mirror.

15. Use according to Claim 14, wherein said melamine-coated or layered base is a fibrous wooden plate i.e. a MDF-plate.
